# EUROPEAN PATENT APPLICATION

(11) **EP 4 428 167 A1**
(43) Date of publication of application: **11.09.2024**
(21) Application number: 23161181.5
(22) Date of filing: 10.03.2023
(51) Int. Cl.: C08F 220/18, C09J 133/04

(54) **EMULSION-BASED PRESSURE-SENSITIVE ADHESIVE COMPOSITIONS AND TAPES OR SHEETS COMPRISING THE SAME**

(71) Applicant: Nitto Belgium NV, 3600 Genk (BE)
(72) Inventor: HAMADA, Hiroyuki, 3600 Genk (BE); JASINSKI, Florent, 3600 Genk (BE)
(74) Representative: Grünecker Patent- und Rechtsanwälte PartG mbB

(57) **Abstract**

A pressure-sensitive adhesive composition which simultaneously enables improved weight-added-peel-off (WAPO) performance and static shear resistance is described, the pressure-sensitive adhesive composition comprising: an acrylic polymer, and an emulsified tackifier; wherein the emulsified tackifier has a softening point measured according to JIS K5902 and JIS K2207 of 120 °C or higher, and a content of the emulsified tackifier is higher than 10 parts by weight and 40 parts by weight or less relative to 100 parts by weight of the solid matter of the acrylic polymer; and wherein the acrylic polymer has been prepared by emulsion polymerization in the presence of a non-ionic reactive surfactant and an ionic reactive surfactant is described. In further aspects, a pressure-sensitive adhesive sheet or tape comprising a pressure-sensitive adhesive layer formed from the aforementioned pressure-sensitive adhesive composition.

## Description

### FIELD OF INVENTION

The present invention relates to an acrylic emulsion-based pressure-sensitive adhesive composition which enables improved weight-added peel-off (WAPO) performance when applied on low-surface energy materials and favourable static shear resistance.

Further aspects of the present invention include pressure-sensitive adhesive sheets comprising the aforementioned adhesive composition.

### BACKGROUND OF THE INVENTION

In the past decades, an increasing number of emulsion-based pressure-sensitive adhesive (PSA) compositions have been developed in view of a growing demand for environmentally sustainable PSA materials and production methods which avoid or at least reduce the use of organic solvents. In this respect, PSA production methods based on emulsion polymerization in aqueous reaction media are preferred as they enable environmentally friendly production without elaborate and/or expensive equipment and with improved safety.

Such adhesive compositions are widely used in masking tapes, double-faced pressure-sensitive adhesive tapes, surface-protective films, packaging tapes, and the like. Especially acrylic pressure-sensitive adhesives of the aqueous dispersion type are increasingly used in place of the existing rubber-based pressure-sensitive adhesives of the aqueous dispersion type because of their excellent adhesive properties and weatherability resistance.

Examples of water-based pressure-sensitive adhesive compositions are disclosed in WO 2012/176544 A1, EP 2 177 584 A, EP 2 062 955 B1, and EP 2 669 345 A1.

However, while the aforementioned prior art documents are concerned with the provision of emulsion-based adhesives and adhesive sheets with improved humidity resistance and/or application on wet surfaces, their adhesive performance on low surface energy (LSE) surfaces leaves room for improvement.

For instance, in the automotive industry, double-sided adhesive tapes are frequently used to bond materials in the interior (e.g. dashboard, roof, or seat) or the exterior of vehicles. However, LSE materials, such as polypropylene (PP) or polyethylene (PE) are often used in such applications. Accordingly, a strong adhesion of adhesives to such LSE parts is critical for the assembly and during the service life of a vehicle.

Therefore, in order to increase the acceptance and applicability of emulsion-based adhesives while following environmental guidelines, it is desirable to develop environmentally friendly pressure-sensitive adhesives which not only enable excellent adhesion retention under high moisture and high humidity, but also enable enhanced weight-added peel-off (WAPO) properties to be able to securely bond materials to various LSE surfaces.

Furthermore, it would be desirable to provide adhesives which simultaneously display a high static shear resistance and are able to withstand shearing or detachment from a normal surface under an applied load acting in the same plane as the surface of a corresponding PSA tape or sheet.

### SUMMARY OF THE INVENTION

The present invention solves this object with the subject matter of the claims as defined herein. The advantages of the present invention will be further explained in detail in the section below and further advantages will become apparent to the skilled artisan upon consideration of the invention disclosure.

It has been found that emulsion polymerization of monomers constituting an acrylic base polymer in the presence of a combination of non-ionic and ionic reactive surfactants and admixing specific amounts of a tackifier with a high softening point to the thus obtained acrylic polymer substantially improves the WAPO performance of the resulting pressure-sensitive adhesive composition composition while further exhibiting an improved static shear resistance. Thus, the present invention has been completed.

Generally speaking, in one aspect the present invention provides a pressure-sensitive adhesive composition comprising: an acrylic polymer, and an emulsified tackifier; wherein the emulsified tackifier has a softening point measured according to JIS K5902 and JIS K2207 of 120 °C or higher, and a content of the emulsified tackifier is higher than 10 parts by weight and 40 parts by weight or less relative to 100 parts by weight of solid matter of the acrylic polymer; and wherein the acrylic polymer has been prepared by emulsion polymerization in the presence of a non-ionic reactive surfactant and an ionic reactive surfactant.

In further aspects, the present invention relates to a pressure-sensitive adhesive sheet or tape comprising a pressure-sensitive adhesive layer formed from the aforementioned pressure-sensitive adhesive composition.

### BRIEF DESCRIPTION OF THE DRAWINGS

FIG. 1 is a schematic representation of an exemplary single-sided pressure-sensitive adhesive sheet.
FIG. 2 schematically depicts an exemplary double-sided pressure-sensitive adhesive sheet.
FIG. 3 illustrates the preparation of an assembly for the WAPO performance test.
FIG. 4 illustrates the conditions for WAPO performance testing.

### DETAILED DESCRIPTION OF THE INVENTION

For a more complete understanding of the present invention, reference is now made to the following description of the illustrative embodiments thereof: For a more complete understanding of the present invention, reference is now made to the following description of the illustrative embodiments thereof:

### Pressure-Sensitive Adhesive Composition

In a first embodiment, the present invention relates to a pressure-sensitive adhesive composition comprising: an acrylic polymer, and an emulsified tackifier; wherein the emulsified tackifier has a softening point measured according to JIS K5902 and JIS K2207 of 120 °C or higher, and a content of the emulsified tackifier is higher than 10 parts by weight and 40 parts by weight or less relative to 100 parts by weight of the solid matter of the acrylic polymer; and wherein the acrylic polymer has been prepared by emulsion polymerization in the presence of a non-ionic reactive surfactant and an ionic reactive surfactant.

### [Acrylic Polymer]

According to the present invention, the acrylic polymer is obtained by subjecting the one or more acrylate-based monomers to an emulsion-based polymerization using water as dispersion medium in the presence of the anionic reactive surfactant and the non-ionic reactive surfactant. Emulsion polymerization may be carried out without the use of solvents, which is not only advantageous from an environmental perspective, but also in that the rate of polymerization in the mixture is higher. Furthermore, in solution polymerization, it is difficult to completely remove the solvent from the final product. Additional advantages of emulsion polymerization are to be found in a low viscosity of the reaction mixture, simplified thermal control of the process and high conversion rates. Moreover, the products obtained in latex form are directly usable.

The (co-)monomers constituting the acrylic polymer are not particularly limited and may be suitably selected by the skilled artisan depending on the desired properties.

For the preparation of an adhesive composition with favorably high adhesion on different types of substrates and particularly excellent properties for the use in so-called foam complexes, wherein the adhesive is being applied in contact with a foam sheet, the one or more acrylate monomers subjected to emulsion polymerization in the presence of the anionic reactive surfactant and the non-ionic reactive surfactant preferably comprise: a) an alkyl (meth)acrylate having an alkyl group with 2 to 14 carbon atoms; b) at least one α,β-ethylenically unsaturated, carboxyl group-containing monomer other than component a), which is preferably selected from at least methyl methacrylate, acrylic acid, methacrylic acid, and combinations thereof; and c) an alkoxysilyl group-containing monomer preferably selected from an alkoxysilyl group-containing acrylate monomer or an alkoxysilyl-group containing vinyl monomer.

Monomer component a) is an alkyl (meth)acrylate having an alkyl group with 2 to 14 carbon atoms, preferably with 2 to 12 carbon atoms and more preferably with 4 to 10 carbon atoms. Without being limited thereto, examples thereof include n-butyl (meth)acrylate, isobutyl (meth)acrylate, n-hexyl (meth)acrylate, 2-ethylhexyl (meth)acrylate, and 2-ethylhexyl (meth)acrylate, cyclohexyl (meth)acrylate, n-octyl (meth)acrylate, isooctyl (meth)acrylate, nonyl (meth)acrylate, isononyl (meth)acrylate, undecyl (meth)acrylate, isodecyl (meth)acrylate, undecyl (meth)acrylate, and the like. Further preferred examples include n-butyl (meth)acrylate and 2-ethylhexyl (meth)acrylate, of which 2-ethylhexyl (meth)acrylate is particularly preferred. Unless otherwise indicated, it will be understood that any term containing parentheses refers, alternatively, to the whole term as if no parentheses were present and the term without that contained in the parentheses, and combinations of each alternative. Thus, the term "(meth)acrylate" means acrylate, methacrylate, or mixtures thereof, and, similarly, the term "(meth)acrylic" generally refers to any of acrylic, methacrylic, and mixtures thereof.

The amount of monomer component a) is not particularly limited. However, to ensure a soft polymer matrix and to improve contact efficiency, component a) is preferably used as main monomer at a content of more than 50 parts by weight, more preferably between 55 to 98 parts by weight, such as 60 to 97 parts by weight with respect to 100 parts by weight of all acrylate monomers constituting the acrylic polymer. In embodiments, component a) may be present in an amount of from 60 to 92 parts by weight of the total amount of monomer components.

Monomer component b) is at least one α,β-ethylenically unsaturated, carboxyl group-containing monomer other than that selected for component a). While not being limited thereto, α,β-ethylenically unsaturated carboxylic acids (acrylic acid, methacrylic acid, beta-acryloxypropionic acid, ethacrylic acid, α-chloroacrylic acid, α-vinylacrylic acid, crotonic acid, α-phenylacrylic acid, cinnamic acid, chlorocinnamic acid, β-styrylacrylic acid, maleic acid, itaconic acid, and citraconic acid) and their acid esters may be mentioned as examples. Preferably, component b) comprises - alternatively or in addition - at least one alkyl (meth)acrylate having an alkyl group with less than 4 carbon atoms, more preferably from 1 to 3 carbon atoms. As examples of the latter, methyl (meth)acrylate, ethyl (meth)acrylate, n-propyl (meth)acrylate, and isopropyl (meth)acrylate may be mentioned. Methyl (meth)acrylate is particularly preferred as it improves stress dissipation during debonding due to the presence of methyl group in the polymer backbone.

Although the (total) amount of monomer component b) is not particularly limited, a (total) amount of 2 to 40 parts by weight with respect to 100 parts by weight of the total amount of monomer components is typically employed. For a favourable hardness of the polymer matrix, especially preferred (total) amounts range from 2 to 20 parts by weight, such as from 3 to 15 parts by weight or from 4 to 10 parts by weight.

From the viewpoint of improved stress dissipation during debonding, it is preferred that component b) comprises: b1) an alkyl (meth)acrylate having an alkyl group with from 1 to 3 carbon atoms, and b2) at least one α,β-ethylenically unsaturated carboxylic acid selected from acrylic acid and methacrylic acid, preferably both. In this case, it is preferred that the weight ratio of components b1) and b2) is from 1:1 to 10:1, more preferably from 2:1 to 5:1.

Component c) is an alkoxysilyl group-containing monomer, a functional monomer which enables crosslinking by hydrolysis and condensation in presence of atmospheric moisture. Component c) is preferably selected from an alkoxysilyl group-containing acrylate monomer or an alkoxysilyl-group containing vinyl monomer, among which alkoxysilyl group-containing acrylate monomers are especially preferred. Examples of the alkoxysilyl-group containing vinyl monomer include vinyltrialkoxysilanes, vinylalkyldialkoxysilanes, and the like. As specific examples of alkoxysilyl group-containing acrylate monomers, (meth)acyloyloxyalkyl-trialkoxysilanes (e.g. (meth)acryloyloxymethyl-trimethoxysilane, (meth)acryloyloxymethyl-triethoxysilane, 2-(meth)acryloyloxyethyl-trimethoxysilane, 2-(meth)acryloyloxyethyl-triethoxysilane, 3-(meth)acryloyloxypropyl-trimethoxysilane (MAPTMS), 3-(meth)acryloyloxypropyl-triethoxysilane, 3-(meth)acryloyloxypropyl-tripropoxysilane, 3-(meth)acryloyloxypropyl-triisopropoxysilane), (meth) acryloyloxyalkyl-alkyldialkoxysilanes (e.g. such as (meth)acryloyloxymethyl-methyldimethoxysilane) and (meth)acryloyloxyalkyl-dialkyl(mono)alkoxysilanes or the like may be mentioned.

The amount of component c) is not particularly limited, and may be between 0.001 to 1 parts by weight with respect to 100 parts by weight of all acrylate monomers constituting the acrylic polymer, for example, such as from 0.005 to 0.7 parts by weight.

In preferred embodiments, a chain transfer agent is added in an amount of 0.001 to 0.3 parts by weight with respect to 100 parts by weight of all acrylate monomers constituting the acrylic polymer, preferably between 0.01 to 0.1 parts by weight. The aforementioned ranges are preferred when targeting a suitable weight-average molecular weight for an improved balance of adhesion properties, debonding performance and mechanical resistance.

In this respect, it may be preferable that the acrylic polymer has a weight-average molecular weight (Mw) in the range of more than 200 kDa and 1000 kDa or less (as measured by gel permeation chromatography (GPC)). In preferred embodiments, the acrylic polymer has a number-average molecular weight (Mn) of less than 800 kDa, more preferably in the range of 50 to 500 kDa, further preferably from 60 to 300 kDa, or especially preferably from 100 to 200 kDa, as measured by gel permeation chromatography (GPC)/size exclusion chromatography (SEC).

The polydispersity index (PDI) of the acrylic polymer, defined as the ratio of the weight-average molecular weight (Mw) to the number-average molecular weight (Mn), is preferably between 1.5 and 4.5, especially preferably between 2.0 and 4.0.

The chain transfer agent is not particularly limited and typically selected from one or more thiol compounds including monofunctional and polyfunctional thiols. Monofunctional thiols include, but are not limited to, propyl mercaptan, butyl mercaptan, hexyl mercaptan, octyl mercaptan, n-dodecyl mercaptan, thioglycollic acid, mercaptopropionic acid, alkyl thioglycollates, mercaptoethanol, mercaptoundecanoic acid, thiolactic acid, and thiobutyric acid, among which n-dodecyl mercaptan is preferred. Examples of polyfunctional thiols include trifunctional compounds such as trimethylol propane tris(3-mercaptopropionate), tetrafunctional compounds such as pentaerythritol tetra(3-mercaptopropionate), pentaerythritol tetrathioglycollate, pentaerythritol tetrathiolactate, pentaerythritol tetrathiobutyrate; hexafunctional compounds such as dipentaerythritol hexa(3-mercaptopropionate), dipentaerythritol hexathioglycollate; and octafunctional thiols such as tripentaerythritol octa (3-mercaptopropionate) or tripentaerythritol octathioglycollate.

If particularly enhanced adhesion to foamed substrates is desired, the acrylic polymer according to the present invention preferably exhibits a glass transition temperature Tg of lower than -20°C, more preferably between -80°C to -30°C, further preferably between -75 to -40°C, especially preferably from -70°C to -48°C, which may be suitably measured by differential scanning calorimetry (DSC).

### [Surfactants]

According to the present invention, emulsion-based polymerization is carried out in the presence of both an ionic reactive surfactant and a non-ionic reactive surfactant.

The term "reactive surfactant", as used herein, generally denotes an ionic and/or non-ionic surfactant which is not only capable of being adsorbed onto the surface of the polymer particles but covalently binds to the acrylic polymer chain via a reactive moiety, typically through a free radical mechanism. Once covalently bound to the surface of the latex (i.e. dispersed polymer particle), the surfactant molecules are no longer reactive and firmly bound to the polymer. However, it is preferred that the ionic and/or non-ionic reactive surfactants used in the present invention are not incorporated into the polymer chain as co-monomers and hence do not act as what is known as "surfmers", although the emulsion polymerization process is conducted in their presence. Accordingly, the surfactants do not substantially compromise the adhesion performance of the acrylic polymer and stabilize the polymer emulsion while not being susceptible to migration through the adhesive bulk to the interface between the adhesive and the substrate, and thus efficiently ensure excellent peel retention under high humidity conditions.

The ionic reactive surfactant enhances the stability of the polymer particle against coalescence or sedimentation and reacts with the growing polymer chain during the polymerization. The ionic surfactant is then part of the polymer backbone and is unable to migrate under high humidity. However, it is possible that such a surfactant does not fully react with the growing polymer chain, leaving "free" surfactant still able to migrate under humidity. Due to its reactivity and typically lower hydrophilicity compared to the anionic reactive surfactant, a non-ionic reactive surfactant is therefore added, which further stabilizes the polymer latex and further reduces the water-sensitivity of the adhesive bulk. Such non-ionic surfactants, even not fully reacted with the growing polymer chain, are non-migrating species because of the low hydrophilicity. For an ideal compromise between obtaining a PSA composition that maintains peel retention under high humidity, an excellent mechanical stability under shear and high static shear resistance, the present invention therefore employs a combination of an ionic reactive surfactant and a non-ionic reactive surfactant. Against this background, the nature of reactive surfactants is not particularly limited as long as the aforementioned functions are exerted.

The reactive moieties of the ionic and non-ionic reactive surfactants used in the emulsion polymerization according to present invention preferably represent ethylenically unsaturated bonds, which are further preferably independently selected from maleic double bonds or terminal olefins, wherein among the latter, an allyl and/or a methallyl group is particularly preferred. Each surfactant may comprise a plurality of such groups. While not being limited thereto, suitable reactive surfactants comprising terminal olefins are disclosed in US 2014/114006 A1, US 2013/047892 A1 and JP 2596441 B2, for example.

Typically, each of the ionic reactive surfactant and the non-ionic reactive surfactant is an amphiphilic molecule comprising a hydrophobic moiety, a hydrophilic moiety and the reactive moiety.

Examples of the hydrophobic moiety include, but are not limited to a hydrocarbon group, a fluorocarbon group, a siloxane group, or combinations thereof.

The hydrophilic moiety preferably comprises a poly(alkylene oxide) group, a poly(alkylalkylene oxide) group, a poly(arylalkylene oxide) group, or combinations thereof. Poly(alkylene oxide) groups and especially poly(ethylene oxide) groups are particularly preferred.

In preferred embodiments, the ionic reactive surfactant is an anionic reactive surfactant and further preferably comprises an anionic group selected from a sulfate group, a sulfonate group, a phosphate ester group and a carboxylate group.

An example of an anionic reactive surfactant with a maleic group is shown in the below General Formula (1):

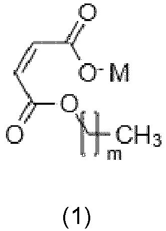

In General Formula (1), m is an integer of from 3 to 100 and M represents a cationic group and is preferably an alkali metal cation or an ammonium cation.

Further preferred examples of anionic reactive surfactants are shown in the below General Formulae (2-1) and (2-2):

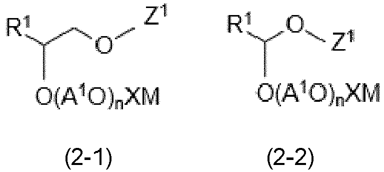

In General Formulae (2-1) and (2-2), R¹ represents a C₆-C₃₀ alkyl group or a C₆-C₆₀ aryl group; n is an integer of from 1 to 200; A¹ is an C₁-C₅ alkylene group, a C₂-C₈ alkylalkylene group or an C₇-C₁₂ arylalkylene group; and X is an anionic group, preferably a sulfate group, a sulfonate group, a phosphate ester group or a carboxylate group, more preferably a sulfonate group. M represents a cationic group and is preferably an alkali metal cation or an ammonium cation.

Other preferred examples of anionic reactive surfactants include polyoxyalkylene alkylphenyl ethers with an ethylenically unsaturated bond. Examples thereof include, but are not limited to compounds according to General Formula (3):

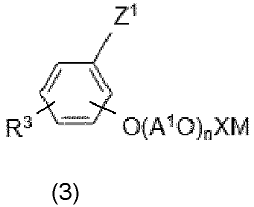

In General Formula (3), R³ represents a C₆-C₅₀ alkyl group or a C₆-C₆₀ aryl group; n is an integer of from 1 to 200; A¹ is an C₁-C₅ alkylene group, a C₂-C₈ alkylalkylene group or an C₇-C₁₂ arylalkylene group; and X is an anionic group, preferably a sulfate group, a sulfonate group, a phosphate ester group or a carboxylate group, more preferably a sulfonate group. M represents a cationic group and is preferably an alkali metal cation or an ammonium cation.

In the above formulae, Z¹ is selected from any of the below residues (3-1) to (3-7), wherein R² as well as R²⁻¹ and R²⁻² (independently) represent a C₁-C₃ alkyl group, preferably a methyl group:

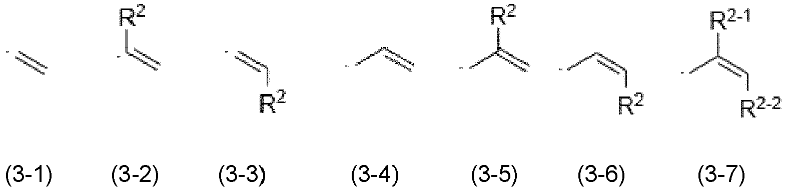

In preferred embodiments, the non-ionic reactive surfactant is represented by any of the below General Formulae (4-1) or (4-2):

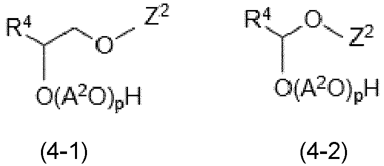

In General Formulae (4-1) and (4-2), R⁴ represents a C₆-C₃₀ alkyl group or a C₆-C₆₀ aryl group; p is an integer of from 1 to 200; and A² is a C₁-C₅ alkylene group, a C₂-C₈ alkylalkylene group or a C₇-C₁₂ arylalkylene group.

An alternatively preferred example of a non-ionic surfactant is shown in General Formula (5):

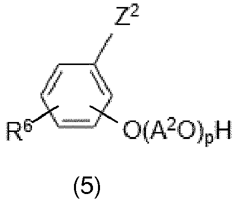

Herein, R⁶ represents a C₆-C₅₀ alkyl group or a C₆-C₆₀ aryl group; p is an integer of from 1 to 200; and A² is an C₁-C₅ alkylene group, a C₂-C₈ alkylalkylene group or an C₇-C₁₂ arylalkylene group.

In the aforementioned general formulae, Z² is selected from any of the below residues (6-1) to (6-7), wherein R⁵ as well as R⁵⁻¹ and R⁵⁻² (independently) represent a C₁-C₃ alkyl group, preferably a methyl group:

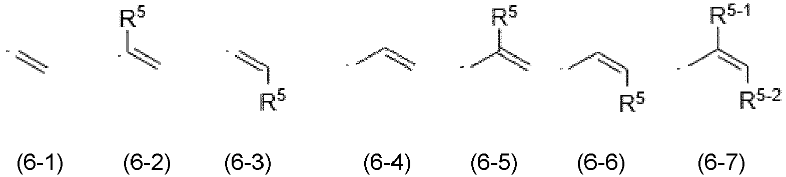

It is generally preferred that the total content of the ionic reactive surfactant and the non-ionic reactive surfactant ranges from 0.1 to 10 parts by weight relative to 100 parts by weight of all acrylate monomers constituting the acrylic polymer, preferably from 0.5 to 6.0 parts by weight, more preferably from 1.0 to 5.0 parts per weight, and especially preferably from 1.25 to 4.5 parts by weight.

For ensuring further improved colloidal stability, the anionic reactive surfactant is preferably used in a content of 0.05 to 5 parts by weight relative to 100 parts by weight of all acrylate monomers constituting the acrylic polymer, more preferably from 0.5 to 2.5 parts per weight, and especially preferably from 0.7 to 1.5 parts by weight. Independently or in combination, for further improved reduction of hydrophilic migratory species in the adhesive, the non-ionic reactive surfactant is preferably used in a content of 0.1 to 5.0 parts by weight relative to 100 parts by weight of all acrylate monomers constituting the acrylic polymer, more preferably from 0.6 to 3.0 parts per weight, and especially preferably from 0.8 to 2.0 parts by weight.

In terms of particularly improved peel retention under high humidity conditions and simultaneously a high resistance to shear without coagulation and formation of gel particles, it is preferred that a weight ratio of anionic reactive surfactant to non-ionic reactive surfactant is within the range of from 5:95 to 95:5, more preferably from 15:85 to 80:20, further preferably from 20:80 to 65:35, and especially preferably from 30:70 to 60:40.

From the viewpoint of especially improved thermal stability, it may be preferred that the acrylic polymer is prepared by emulsion polymerization in the presence of a reactive surfactant (total of non-ionic and ionic) in the amount of between 1.25 parts by weight to 1.75 parts by weight relative to 100 parts by total weight of the monomers constituting the acrylic polymer. With this objective in mind, it may be further preferred that the reactive surfactant comprises an ionic reactive surfactant and a non-ionic reactive surfactant at a ratio of from 50:50 to 99.9:0.1, preferably from 60:40 to 99.5:0.5, and more preferably from 70:30 to 99:1, which may result in a favourable balance in terms of resistance to high-temperature aging and improved peel retention under high humidity conditions and a high resistance to shear.

### [Additives]

Depending on the polymerization conditions, polymerization additives (such as polymerization initiators, stabilizers and/or rheology modifiers) may be suitably added to the composition.

Examples of the polymerization initiator include, but are not limited to an azo initiator (such as 2,2'-azobis[N-(2-carboxyethyl)-2-methylpropionamidine]hydrate, 2,2'-azobisisobutyronitrile, 2,2'-azobis(2-methylpropionamidine) disulfate, 2,2'-azobis(2-amidinopropane) dihydrochloride, 2,2'-azobis[2-(5-methyl-2-imidazolin-2-yl) propane] dihydrochloride, 2,2'-azobis(N, N'-dimethyleneisobutylamidine) dihydrochloride, and the like); a peroxide initiator (e.g., persulfates such as potassium persulfate and ammonium persulfate; benzoyl peroxide, t-butyl hydroperoxide, di-t-butyl peroxide, t-butyl peroxybenzoate, hydrogen peroxide, and the like); and a redox initiator in which a peroxide and a reducing agent are combined (e.g., a combination of peroxide and ascorbic acid, a combination of peroxide and an iron (II) salt, a combination of persulfate and sodium bisulfite, and the like).

The amount of a polymerization initiator can be suitably selected by the skilled artisan depending on the type of initiator and the monomer composition, and will be usually about 0.01 to 1 parts by weight with respect to 100 parts by weight of the total amount of monomer components, for example.

After emulsion polymerization, an acid or a base may be added to adjust the pH of the polymer. Bases, such as ammonia, are preferred stabilizers since they deprotonate the carboxylic functions of component b) and stabilize the resulting particles against coalescence.

In some instances, emulsion-based polymers may require the addition of a rheology modifier (after polymerization) to increase the viscosity of the adhesive. Examples of such rheology modifiers include, but are not limited to alkali swellable emulsions (ASE) and hydrophobically modified variants thereof. In preferred embodiments, rheology modifiers are mixed with the emulsion-based acrylic polymer at a weight ratio of 1:50 to 1:200, preferably at a weight ratio of 1:70 to 1:150.

### [Tackifiers]

The pressure-sensitive adhesive composition according to the present invention is obtained by blending the acrylic polymer with an emulsified tackifier having a softening point measured according to JIS K5902 and JIS K2207 of 120 °C or higher, wherein a content of the emulsified tackifier is higher than 10 parts by weight and 40 parts by weight or less relative to 100 parts by weight of the acrylic polymer. A further improvement in terms of both WAPO performance and shear resistance may be achieved by using the tackifier in a content range of 15 parts by weight to 40 parts by weight, especially preferably from 18 to 38 parts by weight, such as from 20 to 35 parts by weight, relative to 100 parts by weight of the acrylic polymer. Notably, the parts by weight ranges of tackifier refer to the dry content of the tackifier in the emulsified tackifier composition.

It is also preferred to use of an emulsified tackifier having a softening point in the range of from 122°C to 195°C, more preferably from 126°C to 190°C, and especially preferably from 130°C to 185°C. The softening point is determined in accordance to a ring-and-ball method according to JIS K5902 and JIS K2207.

As long as the softening point of the emulsified tackifier is in the prescribed range, its nature is not particularly limited and suitable tackifiers may be selected from rosin-based tackifier resins (e.g., gum rosin, wood rosin, tall oil rosin, stabilized rosin obtained by disproportionating or hydrogenating the rosin), and polymerized rosin), rosin derivative tackifier resins (e.g., esters of rosin-based resins, phenol-modified products of rosin-based resins), petroleum-based tackifier resins (e.g. aliphatic petroleum resins, aromatic petroleum resins, copolymer petroleum resins, alicyclic petroleum resins, and hydrides thereof), terpene-based tackifier resins (e.g., α-pinene resin, β-pinene resin, aromatic-modified terpene resin, and terpene phenol resin), phenol-based tackifier resins, ketone-based tackifier resins (e.g., ketone-based resins obtained by condensing ketones (for example, aliphatic ketones such as methyl ethyl ketone, methyl isobutyl ketone, and acetophenone; alicyclic ketones such as cyclohexanone and methylcyclohexanone) and formaldehyde), and the like.

### [PSA Additives]

Optional additives that can be contained in the acrylic PSA composition include viscosity modifiers (thickeners, etc.), leveling agents, release modifiers, low softening point tackifiers (i.e. tackifiers with a softening point of less than 120°C), plasticizers, softeners, fillers, colorants (pigments, dyes, etc.), antistatic agents, preservatives, anti-aging agents, ultraviolet absorbers, antioxidants and light stabilizers, for example.

Preferably, the use of plasticizers (including hydrocarbon oil components (such as aliphatic/paraffinic components, aromatic components and naphthenic components, as well as mixtures thereof), adipic ester plasticizers, as well as plasticizers selected among propylene oligomers, butene oligomers, isoprene oligomers, hydrogenated isoprene oligomers, butadiene oligomers, benzoic esters and vegetable and animal oils and derivatives thereof, for example) in the acrylic PSA composition is entirely omitted.

### [PSA Properties]

Under aspects of improved stress dissipation and limitation of creep, the acrylic pressure-sensitive adhesive composition preferably exhibits a gel content in the range of from 15 to 45%, further preferably from 20 to 40%. The gel content may be suitably determined by methods known to the skilled artisan.

### Pressure-Sensitive Adhesive Sheets and Tapes

In a second embodiment, the invention relates to a pressure-sensitive adhesive (PSA) sheet (e.g., in the form of a tape) comprising a pressure-sensitive adhesive layer formed from the pressure-sensitive adhesive composition according to the first embodiment described above.

Preferably, the pressure-sensitive adhesive (PSA) sheet comprises an adhesive layer on at least one surface of a carrier layer and an optional release liner provided on the adhesive layer, wherein the adhesive layer comprises the acrylic pressure-sensitive adhesive composition according to the first embodiment described above.

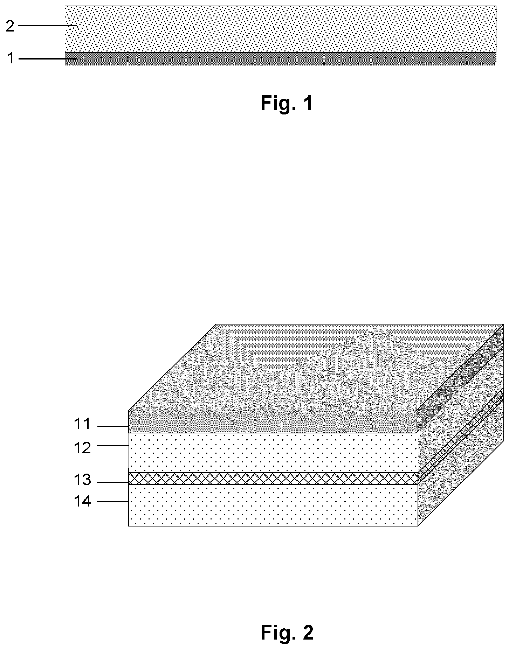

Accordingly, the PSA sheet may be a single-sided adhesive sheet, wherein the pressure-sensitive adhesive composition according to the first embodiment may be provided in an adhesive layer (2) on only one or on both sides of a carrier layer (1), as is illustrated in Fig. 1, or a double-sided adhesive sheet, wherein the pressure-sensitive adhesive composition according to the first embodiment is provided on both sides of a carrier layer (1).

The carrier layer is not particularly limited and may be a paper or preferably a film composed of materials known in the art, such as polyethylene (PE), polypropylene (PP), polyether sulfones, polyamides, polyimides, polyetherimides, polyesters, polyphenyl sulfides, polyamideimides, polyetherimides, polymethacrylates, styrene-based films, polycarbonates, polyether ketones, polyaryls, polyurethanes, polyacrylates, polybutyrals, polyethylene-vinyl acetates, polyethylene naphthylates, fluorinated polymers and combinations thereof. The carrier layer may also incorporate nonwovens or fabrics. Foam carriers may also be mentioned as exemplary carrier layers. Examples of the latter include, but are not limited are in particular foams based on homopolymers and copolymers of ethylene (e.g. PE), ethylene-vinyl acetate copolymers (EVA), polyvinyl acetates, polypropylenes, ethylene-propylene-diene rubber (EPDM), thermoplastic elastomers based on styrene block copolymers, polyurethanes based on aromatic and aliphatic diisocyanates, polyvinyl chloride (PVC), polychloroprenes, natural rubber, acrylate copolymers, and combinations thereof.

Exemplary PSA sheets may also include multilayer PSA tapes, wherein the acrylic pressure-sensitive adhesive composition according to the first embodiment is provided between two carrier layers, wherein one of the carrier layers may be a foam carrier layer.

In a preferred embodiment, the PSA tape is a double-sided PSA tape with the adhesive layer comprising the PSA composition according to the first embodiment on at least one surface of the carrier layer, preferably on both surfaces of the carrier layer. An example thereof is illustrated in Fig. 2, wherein a first adhesive layer (12) is provided on one surface of a carrier layer (13) and a second adhesive layer (14) on the other surface of the carrier layer (13), with the optional release liner (11) being provided in contact with one of the adhesive layers.

Conventional release liners known in the art may be used (e.g. based on polymeric films, papers, woven materials and/or metal foils) on any outer PSA layer surface.

The thicknesses of each of the layers are not particularly limited and may be suitably adjusted by the skilled artisan depending on the choice of materials and the purpose of application.

It will be understood that the preferred features of the first and second embodiments may be freely combined in any combination, except for combinations where at least some of the features are mutually exclusive.

### EXAMPLES

### Preparation of Pressure-Sensitive Adhesive Compositions

A water-dispersed acrylic polymer was prepared by emulsion polymerization of the compositions shown in Table 1.

**TABLE 1: Composition for emulsion polymerization (water excluded).**

| | | **Polymer** |
|---|---|---|
| | | (wt.-% at dry state) |
| Monomers | 2-Ethylhexyl Acrylate | 88.50 |
| | Methyl Methacrylate | 6.23 |
| | Acrylic Acid | 1.27 |
| | Methacryl Acrylate | 0.78 |
| | MAPTMS | 0.023 |
| Chain Transfer Agent | N-Dodecylmercaptan | 0.052 |
| Ionic Reactive Surfactant | Hitenol^{®} KH-1025 | 1.25 |
| Non-Ionic Reactive Surfactant | Noigen^{®} KN-2020 | 1.87 |

Methacryloxypropyltrimethoxysilane (MAPTMS) (commercially obtained as KBM-503 from Shin-Etsu Chem.) was used as functional monomer enabling crosslinking by hydrolysis and condensation in a drying process. N-dodecylmercaptan (n-DDM) was used as a chain transfer agent. VA-044, commercially obtained from Fujifilm Wako Chemicals, was used as an azo-based radical initiator.

The content of anionic reactive surfactant and non-ionic reactive surfactant relative to 100 parts by weight of all acrylate monomers constituting the acrylic polymer are also shown in Table 1. As an anionic reactive surfactant, Hitenol^{®} KH-1025, a polyoxyethylene-1-(allyloxymethyl) alkyl ether ammonium sulfate commercially available (in 25 wt.-% concentration) from Dai-ichi Kogyo Seiyaku (DKS) was used. As the non-ionic reactive surfactant, Noigen^{®} KN-2020, a polyoxyethylene nonyl propenyl phenyl ether-type surfactant commercially available from Dai-ichi Kogyo Seiyaku (DKS) was used.

The phases were homogenized for 15 min at 6000 rpm with an Ultra-Turrax T50 homogenizer.

The emulsion polymerization was conducted in a semi-batch process with no reacting monomer initially present in the reactor. The reactor was purged with nitrogen (N₂) for 1 h before the addition of the initiator. The initiator solution was added once the temperature reached the set temperature of 60°C. The monomer feed started 10 min after the initiator solution was added to the reactor, whereupon the reactor was maintained at 60°C during the polymerization under N₂ atmosphere. The monomer feed was continuously purged with N₂ and fed into the reactor for 5h until the feed was depleted. The temperature was then raised to 65°C for 5 h to age the polymer and reduce the amount of residual monomers.

Ammonia solution (25%) was added after ageing to stabilize polymer particles against coalescence. All pressure-sensitive adhesive compositions were prepared by admixing a rheology modifier (Rheovis AS1125, commercially obtained from BASF) to increase the final adhesive viscosity of the PSA composition.

In case of Comparative Examples 2 to 5 and Examples 1 to 3, tackifiers have been blended into the mixture in the amounts shown in Table 2. The following emulsified tackifiers have been used:
Tackifier A: Super Ester E-865NT (aqueous dispersion of a polymerized rosin resin; softening point (SP) = 160° C; available from Arakawa Chemical Industries, Ltd.)
Tackifier B: Tamanol E-200NT (aqueous dispersion of a terpene phenolic resin; SP = 145° C; available from Arakawa Chemical Industries, Ltd.)
Tackifier C: Snowtack^{®} 110X (aqueous dispersion of a rosin ester; SP = 115° C; available from Lawter)
Tackfier D: Snowtack^{®} 881G (blend of rosin ester and non rosin resin; SP = 96° C; available from Lawter)

**TABLE 2: Pressure-sensitive adhesive compositions.**

| | **Comp. Example 1** | **Comp. Example 2** | **Comp. Example 3** | **Comp. Example 4** | **Example 1** | **Example 2** | **Example 2** |
|---|---|---|---|---|---|---|---|
| | (parts per weight at dry state) | | | | | | |
| Polymer | 100 | 100 | 100 | 100 | 100 | 100 | 100 |
| Tackifier A | - | 5 | - | - | 20 | 35 | - |
| Tackifier B | - | - | - | - | - | - | 20 |
| Tackifier C | - | - | 20 | - | - | - | - |
| Tackifier D | - | - | - | 20 | - | - | - |
| Rheology Modifier | 0.62 | 0.62 | 0.62 | 0.62 | 0.62 | 0.62 | 0.62 |
| Ammonia (25%) | 0.1 | 0.1 | 0.1 | 0.1 | 0.1 | 0.1 | 0.1 |

### PSA Tape Preparation

Double-sided adhesive tapes were prepared, the construction of which is illustrated in Fig. 2. The acrylic adhesive compositions described above constituted both adhesive sides of the tape with a thickness of 65 µm each (65 g/m²). A non-woven paper fabric with a thickness of 30 µm (13 g/m²) was used as a carrier layer, while a siliconized paper with a thickness of 125 µm (122 g/m²) was used as liner to protect the adhesive side and enable release before application. The total thickness of each double-sided adhesive tape (without liner) was 140 µm ± 5 µm.

### Weight Added Peel Off (WAPO) Performance Testing

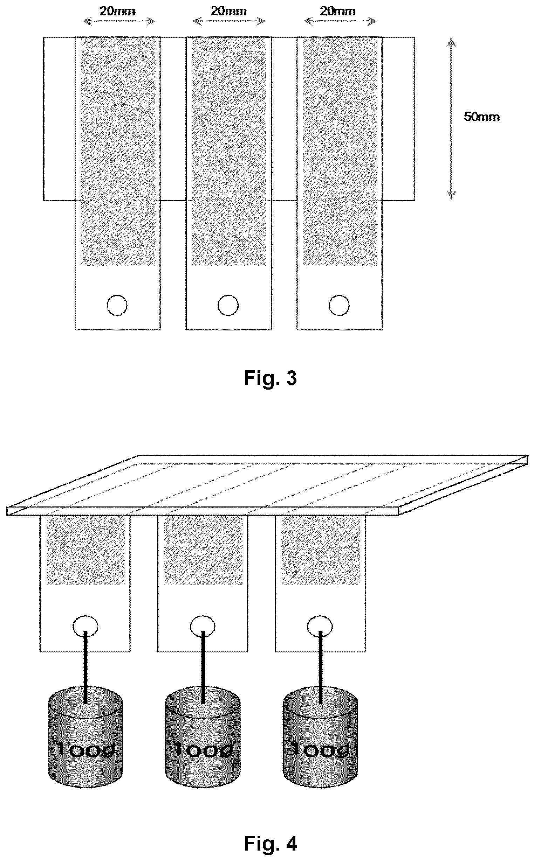

The WAPO (weight added peel off) value (100g, PP, 60°C; [mm/2h]) was measured in accordance with the following method: One of the two release liners on a double-sided pressure sensitive adhesive tape was removed and applied onto a PET film (thickness 23 mm). The tape was cut into a sample with a size of 20 mm width x 70 mm length. The other release liner was removed and the tape was applied to a polypropylene (PP) / talc (20%) composite plate with a roller having a weight of 2kg over a surface of 20 mm width x 50 mm length (see Fig. 3). After a conditioning period of 30 minutes, the assemblies were turned upside down and placed in an oven preheated at 60°C. A weight of 100 g was then attached on each sample, applying a static force at 90° relative to the PP/talc plate surface (according to Fig. 4), and the distance by which each tape has been loosened after 2 hours has been measured. The measured peeling distance of the tape from the substrate plate corresponds to the respective WAPO value. A low distance (in mm) indicates a favourable WAPO performance. On the other hand, a high distance value indicates a poor WAPO performance on low-surface energy substrates. The results of the measurements are shown in Table 3 below.

### Static Shear Resistance Testing

To evaluate the resistance of the adhesives to a static load applied in the same plane as the face material, the static shear resistance was measured.

The test was carried out at ambient room temperature (23° C ± 2° C and 50% ± 5% relative humidity). Each test specimen was cut out having a dimension of 20 mm by 60 mm. The liner was then removed from one side of the test specimen and the adhesive was adhered onto to a PET strip having the same dimensions and a thickness of 0.036 mm. 20 mm of the specimen was wrapped around a metal plate comprising a hole for the weight. The second liner was thereafter removed from the test specimen, which was then applied onto a stainless-steel plate (dimensions: 20 mm×20 mm×2 mm) with a roller having a weight of 2 kg. After 30 minutes, a weight of 1 kg was hung into the hole of the metal plate. The time until failure was measured and recorded in minutes. Three samples were measured per test specimen. The test results are likewise shown in Table 3.

**TABLE 3: Weight-Added-Peel-Off (WAPO) and Static Shear Resistance Test Results.**

| | **Comp. Example 1** | **Comp. Example 2** | **Comp. Example 3** | **Comp. Example 4** | **Example 1** | **Example 2** | **Example 3** |
|---|---|---|---|---|---|---|---|
| WAPO Distance in mm (60°C, 2h) | 747 | 709 | 630 | 628 | 284 | 278 | 337 |
| Time of Drop in Static Shear Resistance Test (min) | 830 | 853 | 290 | 315 | 1482 | 2006 | 1291 |

The experimental results show that the use of an emulsified tackifier having a high softening point leads to a superior WAPO performance if said tackifier is employed in the range of from 10 parts by weight to 40 parts by weight relative to 100 parts by weight of the acrylic polymer (see Examples 1 to 3 vs. Comparative Example 2). Comparative Examples 3 and 4 demonstrate that an inferior WAPO performance is observed when the emulsified tackifier has a softening point lower than required by the present invention. Finally, the highest distance (i.e. highest peel-off) is observed in the sample of Comparative Example 1, wherein no tackifier has been added.

It is further shown that Examples 1 to 3 simultaneously exhibit a superior static shear resistance when compared to Comparative Examples 1 to 4.

An evaluation of Comparative Examples 3 and 4 shows that addition of a tackifier with a low softening point slightly improves the WAPO performance but simultaneously leads to a degradation in static shear resistance.

In conclusion, the above results demonstrate that the present invention provides an emulsion-based pressure-sensitive adhesive composition which ensures improved WAPO performance and simultaneously provides for an excellent static shear resistance.

Once given the above disclosure, many other features, modifications, and improvements will become apparent to the skilled artisan.

### Reference Numerals

- 1:: carrier layer
- 2:: adhesive layer
- 11:: release liner
- 12:: first adhesive layer
- 13:: carrier layer
- 14:: second adhesive layer

## Claims

1. A pressure-sensitive adhesive composition comprising:
an acrylic polymer, and
an emulsified tackifier;
wherein the emulsified tackifier has a softening point measured according to JIS K5902 and JIS K2207 of 120 °C or higher, and a content of the emulsified tackifier is higher than 10 parts by weight and 40 parts by weight or less relative to 100 parts by weight of solid matter of the acrylic polymer; and
wherein the acrylic polymer has been prepared by emulsion polymerization in the presence of a non-ionic reactive surfactant and an ionic reactive surfactant.

2. The pressure-sensitive adhesive composition according to claim 1, wherein the emulsified tackifier has a softening point measured according to JIS K5902 and JIS K2207 in the range of from 122°C to 195°C, preferably from 126°C to 190°C, and further preferably from 130°C to 185°C.

3. The pressure-sensitive adhesive composition according to claim 1 or claim 2, wherein the emulsified tackifier is selected from rosin-based tackifier resins, rosin derivative tackifier resins, petroleum-based tackifier resins, terpene-based tackifier resins, phenol-based tackifier resins and ketone-based tackifier resins.

4. The pressure-sensitive adhesive composition according to any one of claims 1 to 3, wherein the content of the emulsified tackifier is in the range of from 15 parts by weight to 40 parts by weight relative to 100 parts by weight of solid matter of the acrylic polymer.

5. The pressure-sensitive adhesive composition according to any one of claims 1 to 4, wherein the total content of the ionic reactive surfactant and the non-ionic reactive surfactant ranges from 0.1 to 10 parts by weight relative to 100 parts by weight of solid matter of the acrylic polymer, preferably from 0.5 to 6.0 parts by weight, more preferably from 1.0 to 5.0 parts per weight, and further preferably from 1.25 to 4.5 parts by weight.

6. The pressure-sensitive adhesive composition according to any one of claims 1 to 5, wherein a weight ratio of ionic reactive surfactant to non-ionic reactive surfactant is within the range of from 5:95 to 95:5, preferably from 15:85 to 80:20, more preferably from 20:80 to 65:35, and especially preferably from 30:70 to 60:40.

7. The pressure-sensitive adhesive composition according to any one of claims 1 to 6, wherein the ionic reactive surfactant is used in a content of 0.7 to 5 parts by weight relative to 100 parts by weight of all monomers constituting the acrylic polymer, and/or wherein the non-ionic reactive surfactant is used in a content of 0.6 to 5.0 parts by weight relative to 100 parts by weight of all monomers constituting the acrylic polymer.

8. The pressure-sensitive adhesive composition according to any one of claims 1 to 7, wherein each of the ionic reactive surfactant and the non-ionic reactive surfactant comprises a hydrophobic moiety, a hydrophilic moiety and the reactive moiety; and wherein the hydrophobic moiety is preferably selected from a hydrocarbon, fluorocarbon or siloxane group, and/or wherein the hydrophilic moiety preferably comprises a poly(ethylene oxide) group.

9. The pressure-sensitive adhesive composition according to any one of claims 1 to 8, wherein the ionic reactive surfactant is an anionic reactive surfactant, preferably an anionic reactive surfactant comprising an anionic group selected from a sulfate group, a sulfonate group, a phosphate ester group and a carboxylate group.

10. The pressure-sensitive adhesive composition according to any one of claims 1 to 9,
wherein monomers constituting the acrylic polymer comprise:
a) an alkyl (meth)acrylate having an alkyl group with 2 to 14 carbon atoms;
b) at least one α,β-ethylenically unsaturated, carboxyl group-containing monomer other than component a), which is preferably selected from at least methyl methacrylate, acrylic acid, methacrylic acid, and combinations thereof; and
c) an alkoxysilyl group-containing monomer preferably selected from an alkoxysilyl group-containing acrylate monomer or an alkoxysilyl-group containing vinyl monomer.

11. The pressure-sensitive adhesive composition according to claim 10, wherein the amount of component a) is between 60 to 97 parts by weight, the (total) amount of component(s) b) is between 2 to 40 parts by weight, and the amount of component c) is between 0.001 to 1 parts by weight, each amount being given with respect to 100 parts by weight of solid matter of the acrylic polymer.

12. The pressure-sensitive adhesive composition according to any one of claims 1 to 11, wherein the acrylic polymer comprises a chain transfer agent in an amount of 0.001 to 0.3 parts by weight with respect to 100 parts by weight of the solid matter of the acrylic polymer, preferably between 0.02 to 0.1 parts by weight.

13. The pressure-sensitive adhesive composition according to any one of claims 1 to 10, wherein the acrylic polymer has a weight-average molecular weight (M_{w}) measured by gel permeation chromatography (GPC) in the range of more than 200 kDa and 1000 kDa or less and/or wherein the acrylic polymer has a polydispersity index (PDI) in the range of from 1.5 to 4.5, preferably in the range of from 2.0 to 4.0

14. A pressure-sensitive adhesive sheet or tape comprising a pressure-sensitive adhesive layer formed from the pressure-sensitive adhesive composition according to any one of claims 1 to 13.

15. The pressure-sensitive adhesive sheet or tape according to claim 12, configured as a double-sided pressure-sensitive adhesive sheet comprising a substrate, a first adhesive layer on one side of the substrate, and a second adhesive layer on the other side of the substrate,
wherein the pressure-sensitive adhesive composition according to any one of claims 1 to 13 is comprised in one of the first adhesive layer or the second adhesive layer, or
wherein the pressure-sensitive adhesive composition according to any one of claims 1 to 13 is comprised in each of the first adhesive layer and the second adhesive layer.
